# EUROPÄISCHE PATENTSCHRIFT

(11) **EP 1 312 154 B1**
(45) Veröffentlichungstag und Bekanntmachung des Hinweises auf die Patenterteilung: **03.07.2013**
(21) Anmeldenummer: 01967004.1
(22) Anmeldetag: 15.08.2001
(51) Int. Cl.: H02K 17/16

(54) **KÄFIGLÄUFER FÜR ASYNCHRONMOTOREN**
SQUIRREL CAGE ROTOR FOR AN ASYNCHRONOUS INDUCTION MOTOR
INDUIT A CAGE D'ECUREUIL POUR MOTEUR A INDUCTION ASYNCHRONE

(30) Priorität: 23.08.2000 DE 10043329
(43) Veröffentlichungstag der Anmeldung: 21.05.2003
(73) Patentinhaber: Siemens Aktiengesellschaft, 80333 München (DE)
(72) Erfinder: KUEMMLEE, Horst, 13505 Berlin (DE); HENNING, Holger, 89537 Giengen (DE)
(86) Internationale Anmeldenummer: PCT/DE2001/003093
(87) Internationale Veröffentlichungsnummer: WO 2002/017461

(56) Entgegenhaltungen:
- GB-A- 1 129 064
- GB-A- 1 427 818
- US-A- 2 421 860
- US-A- 3 705 971
- PATENT ABSTRACTS OF JAPAN vol. 005, no. 015 (E-043), 29. Januar 1981 (1981-01-29) -& JP 55 141945 A (TOSHIBA CORP), 6. November 1980 (1980-11-06)

## Beschreibung

Die Erfindung liegt auf dem Gebiet der dynamoelektrischen Maschinen und ist bei der konstruktiven Ausgestaltung des Läufers eines asynchronen Induktionsmotors anzuwenden, bei dem die als Leiterstäbe ausgebildeten Wicklungen mittels Kurzschlussringen kurzgeschlossen sind.

Bei einer bekannten Asynchronmaschine dieser Art besteht der Läuferkern aus massivem Stahl, wobei in die dem Luftspalt zugewandte Oberfläche des Läufers Nuten eingearbeitet sind, die jeweils radial nach außen konvergierende Nutwände aufweisen. Die dem Läufer zugeordnete Wicklung ist als Käfigwicklung ausgebildet und besteht aus Leitermetallstäben, die in den Läufernuten formschlüssig angeordnet sind. Die außerhalb des Blechpaketes des Ständers liegenden Abschnitte der Leitermetallstäbe bilden gemeinsam einen zusammengesetzten ringförmigen Wicklungsteil, wobei diese Abschnitte zweckmäßig miteinander verschweißt sind. Da die Leiterstäbe als U-Profilstäbe ausgebildet sind, wobei jeder U-Schenkel eine Läufernut zur Hälfte ausfüllt, ragt die Käfigwicklung teilweise in den magnetischen Luftspalt hinein (DE 2 537 706 B1).

Bei einer anderen bekannten Asynchronmaschine ist der Läuferkern aus Blechen aufgebaut, die zur Aufnahme von Leiterstäben mit Ausnehmungen versehen sind. Den Leiterstäben sind an den Enden Kurzschlussringe zugeordnet, die mit den Enden der Leiterstäbe verlötet sind (DE 2 362 195 A1).

Für eine Asynchronmaschine großer Leistung und hoher Betriebsdrehzahl ist weiterhin eine Läuferkonstruktion bekannt, bei der dem aus Blechen aufgebauten Läuferkern ein vorgefertigter Kurzschlusskäfig zugeordnet ist, wobei der Kurzschlusskäfig aus zwei Halbkäfigen mit angeformten Kurzschlussringen besteht, die etwa im Bereich der halben Länge des Kurzschlussläufers miteinander verschweißt oder verlötet sind. Auf die Kurzschlussringe sind dabei zweckmäßig noch hochfeste, nichtmagnetische Kappenringe aufgezogen (DE 197 29 432 C1).

Aus der US 2 421 860 A ist eine elektrische Maschine bekannt, welche einen Läufer mit einem Kurzschlusskäfig aufweist und welche besonders für hohe Drehzahlen geeignet ist.

Aus der JP 55 141 945 A ist ein Läufer mit einem Kurzschlusskäfig bekannt, wobei die Stabilität des Rotors dadurch erhöht wird, dass bei der Montage der Kurzschlusskäfig am Rotor durch Schweißen befestigt wird.

Ausgehend von einem Käfigläufer für einen asynchronen Induktionsmotor mit den Merkmalen des Oberbegriffes des Patentanspruches 1 (US 2 421 860 A) liegt der Erfindung die Aufgabe zugrunde, den Käfigläufer so auszugestalten, dass er bei einer Leistungsabgabe des Motors von mehr als 1 MW auch bei Drehzahlen von mehr als 10.000 U/min und damit bei Umfangsgeschwindigkeiten von mehr als 200 m/sec betrieben werden kann und hierzu einfach herstellbar ist.

Zur Lösung dieser Aufgabe ist gemäß der Erfindung vorgesehen, dass die Nuten parallele oder annähernd parallele Nutenwände aufweisen
und dass die Leiterstäbe über ihre ganze Länge in die Nuten eingelötet sind,
wobei die Leiterstäbe plan zur Oberfläche des Läuferkernes angeordnet sind,
wobei die Leiterstäbe (4) in dem dem Nutgrund (10) zugewandten Bereich mit einer längs verlaufenden Rinne (11) versehen sind.

Ein derart ausgestalteter Käfigläufer zeichnet sich durch eine radial kleine Bauhöhe des Käfigs aus. Demzufolge kann - bei gleichem Außendurchmesser des Läufers im Vergleich zu Läufern mit größerer Bauhöhe des Kurzschlusskäfigs - die Läuferwelle einen größeren Durchmesser aufweisen, was zu einer steiferen Läuferkonstruktion und damit zu geringerer Schwingungsneigung bei hohen Drehzahlen führt. Dadurch, dass die Leiterstäbe plan zur Oberfläche des Läufers angeordnet sind - beispielsweise durch einen spanabhebenden Bearbeitungsvorgang - weist der Käfigläufer eine glatte Oberfläche und damit sehr kleine Reibungsverluste auf. - Der zur Fixierung der Leiterstäbe in den Nuten des Läuferkernes erforderliche Lötprozess ist fertigungstechnisch leicht zu beherrschen. Zum Einbringen des Lotes in die Fügebereiche empfiehlt es sich dabei, die Leiterstäbe in dem dem Nutgrund zugewandten Bereich mit einer längsverlaufenden Rinne zu versehen, in die vor dem Einlegen der Leiterstäbe in die Nuten das Lotmaterial eingebracht wird. Die Rinne kann zur Aufnahme eines runden Lotdrahtes kreisförmig gestaltet sein. - Alternativ kann zunächst stab- oder drahtförmiges Lötmaterial in die jeweilige Nut gelegt und anschließend der Leiterstab mit der Rinne über das Lötmaterial gestülpt werden.

Die Zuordnung der Kurzschlussringe zu den in die Nuten des Läuferkernes eingelöteten Leiterstäben kann in Weiterbildung der Erfindung in der Weise erfolgen, dass der Läuferkern und die Leiterstäbe an den Enden des Läuferkernes, dass heißt im nichtaktiven Bereich des Kurzschlusskäfigs, konisch verjüngt sind und dass auf den verjüngten Bereich ein innen ebenfalls konisch verjüngter Kurzschlussring aufgelötet ist. Bei einer solchen Ausgestaltung trägt der Kurzschlussring nur geringfügig über den Durchmesser des Läuferkernes auf, wobei der Kurzschlussring - abhängig von der Neigung der konischen Zuspitzung - über eine große Fläche mit den Leiterstäben verbunden ist. Zusätzlich wird durch diese Maßnahme die Stromverteilung im Kurzschlussringquerschnitt vergleichmäßigt; weiterhin lassen sich Wärmedehnungsunterschiede zwischen Läuferkern und dem Kurzschlussring beim Lötprozess durch axiales Verschieben des Kurzschlussringes kompensieren.

Anstelle der Verwendung eines diskreten Kurzschlussringes kann man zur Bewerkstelligung des elektrisch erforderlichen Kurzschlusses im Bereich der Enden der Leiterstäbe - wobei diese kürzer als der Läuferkern sind - zwei Ringnuten vorsehen, in deren Bereich je zwei benachbarte Leiterstäbe über ein eingelegtes Zwischenstück miteinander verlötet sind.

Zwei Ausführungsbeispiele des neuen Käfigläufers sind in den Figuren 1 bis 5 dargestellt. Dabei zeigt
Figur 1 einen Käfigläufer mit an den Enden des Läuferkernes konisch verjüngten Enden der Leiterstäbe,
Figur 2 die Zuordnung von Leiterstäben und Kurzschlussring gemäß Figur 1 im Detail,
Figur 3 eine Querschnittsdarstellung von Nuten und Leiterstäben gemäß Figur 1,
Figur 4 einen Käfigläufer mit in die Mantelfläche des Läuferkernes eingesenkten Kurzschlussringen und Figur 5 die Ausgestaltung des Kurzschlussringes gemäß Figur 4 im Querschnitt.

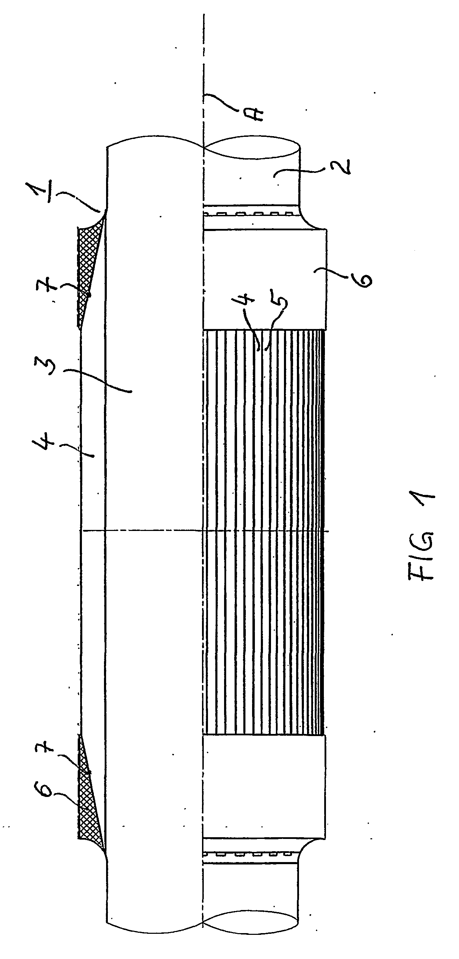

Figur 1 zeigt den wesentlichen Bereich des Käfigläufers einer Asynchronmaschine, wobei im unteren Teil der Darstellung eine Ansicht und im oberen Teil der Darstellung ein Längsschnitt dargestellt sind. Der Käfigläufer besteht aus massivem Stahl und weist eine Welle 2 mit der Achse A auf, die in einen Läuferkern 3 übergeht. Der Läuferkern ist in seinem Außendurchmesser größer als der Durchmesser der Welle 12 gewählt. In den Läuferkern sind in Achsrichtung verlaufende Nuten eingebracht, zwischen denen Stege 5 vorhanden sind, wobei in die Nuten Leiterstäbe 4 eingesetzt sind. Diese sind durch einen Bearbeitungsvorgang plan mit der Oberfläche des Läuferkernes gestaltet.

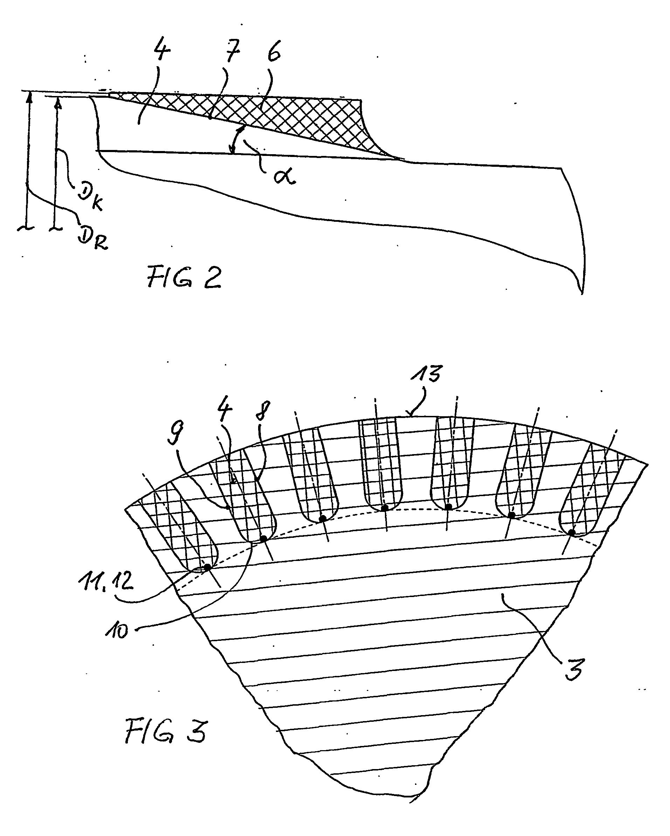

Die Stege 5 und die in die Nuten des Läuferkernes eingesetzten Leiterstäbe 4 sind in den beiden Endbereichen konisch verjüngt, wodurch sich die konisch zur Läuferachse zulaufenden Bereiche 7 ergeben. Auf die beiden Bereiche 7 ist jeweils ein Kurzschlussring 6 aufgesetzt. Gemäß Figur 2 ist der Außendurchmesser D_{R} der Kurzschlussringe etwas größer als der Außendurchmesser D_{K} des Läuferkernes gewählt. Die Neigung der konischen Verjüngung ist mit dem Winkel α bezeichnet, der bei etwa 20° liegt.

Gemäß Figur 3 sind die in den Läuferkern 3 eingebrachten Nuten derart gestaltet, dass sie parallel verlaufende Nutwände 8 und 9 aufweisen und im Nutgrund 10 konkav gestaltet sind. Die in den Nuten eingesetzten Leiterstäbe sind an den Nutquerschnitt angepasst und weisen in ihren konvexgestalteten, an die konkave Gestaltung der Nut angepassten Bereich jeweils eine in Längsrichtung des Leiterstabes verlaufende Rinne 11 auf, in die Lötmaterial 12 eingesetzt ist. Durch Erwärmung des Läuferkernes wird dieses Lötmaterial zum Schmelzen gebracht, so dass im fertigen Zustand die Leiterstäbe 4 ganzflächig in die Nuten eingelötet sind.

Die auf die verjüngten Enden der Leiterstäbe und des Läuferkernes aufgesetzten Kurzschlussringe 6 sind mit den Enden der Leiterstäbe und dem abgeschrägten Stege des Läuferkernes ebenfalls durch eine stoffschlüssige Verbindung, insbesondere durch Löten, verbunden.

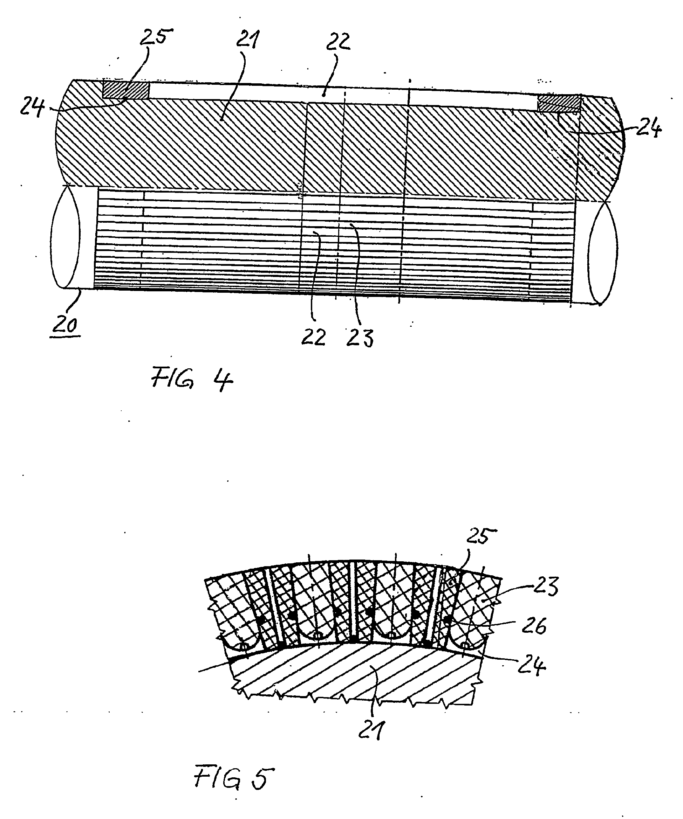

Bei dem Ausführungsbeispiel gemäß den Figuren 4 und 5 eines Käfigläufers 20 ist der Läuferkern 21 ebenfalls mit in Längsrichtung verlaufenden Nuten versehen, zwischen denen Stege 23 vorhanden sind. Diese Nuten sind in die Oberfläche des Läuferkernes eingegraben. In diese Nuten sind Leiterstäbe 23 eingelegt. An den beiden Enden der Nuten ist jeweils zusätzlich eine ringförmige Nut 24 vorgesehen, wodurch die Stege 22 beidendig verkürzt sind. In die Bereiche zwischen den Stegen 22 und den Ringnuten 24 sind Zwischenstücke 25 aus dem gleichen Material wie die Leiterstäbe, insbesondere Kupfer, eingesetzt. Diese Zwischenstücke bilden zusammen mit den Enden der Leiterstäbe die beiden Kurzschlussringe. Zwischenstücke und Enden der Leiterstäbe sind ebenfalls durch ein Lötvorgang stoffschlüssig miteinander verbunden. Hierzu sind die Zwischenstücke gemäß Figur 2 mit seitlichen Rinnen 26 versehen, in die ebenfalls Lötmaterial eingebracht ist. - Die Leiterstäbe 23 sind in gleicher Weise wie die Leiterstäbe 4 gemäß Figur 2 ausgebildet.

## Patentansprüche

1. Käfigläufer für einen asynchronen Induktionsmotor mit einer Leistung größer als 1 MW, bestehend aus
- einem integral mit einer Läuferwelle ausgebildeten Läuferkern (3) aus massivem Stahl, der mit in Achsrichtung verlaufenden Nuten versehen ist, und
- in den Nuten angeordneten, an den Nutquerschnitt angepassten Leiterstäben (4), die an ihren Enden jeweils mittels stoffschlüssiger Verbindungen durch einen Kurzschlussring (6) kurzgeschlossen sind,
**dadurch gekennzeichnet,**
**dass** die Nuten parallele oder annähernd parallele Nutwände (8, 9) aufweisen und
**dass** die Leiterstäbe (4) über ihre ganze Länge in die Nuten eingelötet sind,
wobei die Leiterstäbe (4) plan zur Oberfläche (13) des Läuferkernes (3) angeordnet sind,
wobei die Leiterstäbe (4) in dem dem Nutgrund (10) zugewandten Bereich mit einer längsverlaufenden Rinne (11) versehen sind.

2. Käfigläufer nach Anspruch 1
**dadurch gekennzeichnet,**
**dass** der Läuferkern (3)und die Leiterstäbe (4)an den Enden des Läuferkernes konisch verjüngt (7) sind und dass auf den verjüngten Bereich ein innen ebenfalls konisch verjüngter Kurzschlussring (6) aufgelötet ist.

3. Käfigläufer nach Anspruch 1
**dadurch gekennzeichnet,**
**dass** der Läuferkern (21)im Endbereich der Leiterstäbe (23) mit jeweils einer Ringnut (24) versehen ist
und **dass** die Enden der Leiterstäbe über in die Ringnut eingesetzte Zwischenstücke (25) miteinander verlötet sind.

4. Käfigläufer nach einem der Ansprüche 1 bis 3,
**dadurch gekennzeichnet,**
**dass** der Nutgrund (10)jeder Nut konkav geformt ist.

## Claims

1. Squirrel-cage rotor for an asynchronous induction motor having power greater than 1 MW, comprising
- a rotor core (3) made of massive steel and formed integrally with a rotor shaft, said rotor core provided with slots extending in an axial direction; and
- conductor bars (4) disposed in the slots and conforming to the slot cross-section, said conductor bars having ends, each of which being short-circuited by a short-circuit ring by means of a material-interconnecting fit,
**characterised in that**
the slots (8, 9) have parallel or substantially parallel slot walls (8, 9), and
that the conductor bars (4) are soldered over their entire length into the slots,
with the conductor bars (4) arranged flush with the surface (13) of the rotor core (3),
wherein the conductor bars (4) are provided in the area facing the slot base (10) with an elongate channel (11).

2. Squirrel-cage rotor according to claim 1,
**characterised in that**
the rotor core (3) and the conductor bars (4) are conically tapered at the ends of the rotor core, and that a short-circuit ring (6) which on the inside is also conically tapered, is soldered onto the tapered region.

3. Squirrel-cage rotor according to claim 1,
**characterised in that**
the rotor core (21) is provided in the end zone of each of the conductor bars (23) with an annular groove (24),
and that the ends of the conductor bars are soldered together via intermediate pieces (25) placed into the annular groove.

4. Squirrel-cage rotor according to one of the claims 1 to 3,
**characterised in that**
the slot base (10) of each slot is configured concavely.

## Revendications

1. Rotor à cage d'écureuil pour moteur à induction asynchrone d'une puissance plus grande que 1 MW, constitué
- d'un noyau ( 3 ) de rotor, qui est en acier plein et qui est pourvu d'encoches s'étendant dans la direction axiale, et
- des barreaux ( 4 ) conducteurs, qui sont montés dans les encoches, qui sont adaptés à la section transversale des encoches et qui sont court-circuités par leur extrémité par un anneau ( 6 ) de court-circuit respectivement au moyen de liaisons à complémentarité de matière,
**caractérisé**
**en ce que** les encoches ont des parois ( 8, 9 ) d'encoche, parallèles ou à peu près parallèles et
**en ce que** les barreaux ( 4 ) conducteurs sont brasés sur toute la longueur dans les encoches,
dans lequel les barreaux ( 4 ) conducteurs sont pourvus de manière plane par rapport à la surface ( 13 ) du noyau ( 13 ) du rotor,
dans lequel les barreaux ( 4 ) conducteurs sont pourvus d'un canal ( 11 ) s'étendant en longueur dans la zone tournée vers le fond ( 10 ) de l'encoche.

2. Rotor à cage d'écureuil suivant la revendication 1, **caractérisé**
**en ce que** le noyau ( 3 ) du rotor et les barreaux ( 4 ) conducteurs se rétrécissent ( 7 ) coniquement aux extrémités du noyau du rotor et en ce qu'un anneau ( 6 ) de court-circuit se rétrécissant également coniquement vers l'intérieur est brasé sur la zone rétrécie.

3. Rotor à cage d'écureuil suivant la revendication 1, **caractérisé**
**en ce que** le noyau ( 21 ) du rotor est pourvu, dans la zone d'extrémité des barreaux ( 23 ) conducteurs, respectivement d'une encoche ( 24 ) annulaire et en ce que les extrémités des barreaux conducteurs sont brasés ensemble par des intercalaires ( 25 ) insérés dans l'encoche annulaire.

4. Rotor à cage d'écureuil suivant les revendications 1 à 3, **caractérisé**
**en ce que** le fond ( 10 ) de chaque encoche est concave.
